# EUROPÄISCHE PATENTSCHRIFT

(11) **EP 2 987 577 B1**
(45) Veröffentlichungstag und Bekanntmachung des Hinweises auf die Patenterteilung: **22.07.2020**
(21) Anmeldenummer: 15179771.9
(22) Anmeldetag: 05.08.2015
(51) Int. Cl.: B23B 51/04, B23D 61/02, B28D 1/04, B27B 5/12

(54) **LOCHSÄGE**
HOLE SAW
SCIE A GUICHET

(30) Priorität: 08.08.2014 DE 102014111347
(43) Veröffentlichungstag der Anmeldung: 24.02.2016
(73) Patentinhaber: wolfcraft GmbH, 56746 Kempenich (DE)
(72) Erfinder: Ebert, Winfried, 56745 Weibern (DE); Deuster, Thomas, 56746 Kempenich (DE)
(74) Vertreter: Grundmann, Dirk

(56) Entgegenhaltungen:
- EP-A1- 0 603 121
- WO-A1-97/00749
- GB-A- 557 335
- JP-A- 2007 290 112

## Beschreibung

Die Erfindung betrifft eine Lochsäge gemäß dem Oberbegriff des Anspruches 1. Eine solche Lochsäge ist aus der JP 2007290112 A bekannt.

Eine Lochsäge besitzt einen becherförmigen Sägenkörper, der einen Boden und eine an den Boden angrenzende Wand besitzt, welche Fenster und an ihrem vom Boden wegweisenden Rand die Sägezähne aufweist. Eine derartige Lochsäge wird in den DE 10 2009 046 907 A1, DE 602 13 892 T2, WO 2004/ 020162 und US 8,622,665 B2 beschrieben.

Aus der JP 2007290112 A ist eine Lochsäge bekannt, die eine zylindrische Höhlung aufweist. Die die zylindrische Höhlung umgebende Wand besitzt einen Rand, auf dem Schneidzähne angeordnet sind, die nach radial außen und innen geschränkt sind. Zwischen zwei Schneidzähnen ist ein Spandickenbegrenzer angeordnet.

Die WO97/00749 beschreibt eine Lochsäge mit einem Sägekörper, der ebenfalls eine eine zylindrische Höhlung umgebende Wand mit einem Rand aufweist, von dem nach riadial innen und radial außen geschränkte Zähne abragen.

Die GB 557335 A beschreibt eine Lochsäge mit mehreren unterschiedlich stark geschränkten Zähnen.

Der Erfindung liegt die Aufgabe zugrunde, eine gebrauchsvorteilhaft weitergebildete Lochsäge anzugeben.

Gelöst wird die Aufgabe durch die im Anspruch 1 angegebene Erfindung.

Auf dem Rand der Wand sind sowohl radial nach innen geschränkte als auch radial nach außen geschränkte Zähne vorgesehen. Die Lochsäge ist mit einem Antriebsaggregat verbindbar, mit dem der Sägenkörper um die Symmetrieachse der zylindrischen Höhlung drehangetrieben werden kann. Die radial nach innen und radial nach außen geschränkten Zähne erzeugen beim Eintritt des Sägenkörpers in ein Werkstück einen Spalt, der eine Spaltweite aufweist, die größer ist als die Materialstärke der Wand, so dass sich die Seitenwände der Wand durch eventuelle Reibung an der Spaltwand nicht übermäßig aufheizen. Vorteilhaft ist zumindest einer der radial nach innen geschränkten Zähne um ein größeres Maß radial nach innen geschränkt als die übrigen radial nach innen geschränkten Zähne. Die regulär radial nach innen geschränkten Zähne können um etwa 0,3 mm nach innen geschränkt sein. Der mindestens eine Zahn ist bevorzugt um etwa 0,9 mm radial nach innen geschränkt. Dieser Zahn wirkt als Räumzahn. Er verbreitert den Abstand der Spaltwand zur Innenseite der Wand. Mit der erfindungsgemäßen Lochsäge werden in der Regel Durchgangslöcher durch eine Werkplatte gebohrt. Der Bohrungskern verbleibt innerhalb der zylindrischen Höhlung und muss anschließend aus der becherförmigen Höhlung des Sägenkörpers entfernt werden. Durch den vorteilhaften Räumzahn, der um ein größeres Maß radial nach innen geschränkt ist, wird ein Kern mit einem geringeren Außendurchmesser gesägt, der einfacher aus der zylindrischen Höhlung entnommen werden kann. Dies ist insbesondere dann von Vorteil, wenn entweder nur ein einziger Räumzahn vorgesehen ist oder eine Mehrzahl von Räumzähnen sich nur auf einer Hälfte des Randes der Wand erstrecken, also auf einem sich um weniger als 180 Grad erstreckenden Bogenabschnitt des Randes angeordnet sind. Dann kann zum Herausnehmen des Kerns aus der Höhlung der Kern in Richtung weg von der Hälfte des Randes verlagert werden, der die ein oder mehreren Räumzähne aufweist. Die Lochsäge besitzt bevorzugt keinen zentralen Pilotbohrer oder einen Pilotbohrer, der eine Pilotbohrung bohrt, die ein radiales Verlagern des Kernes innerhalb der zentralen Höhlung erlaubt. In einer bevorzugten Weiterbildung ist vorgesehen, dass der mindestens eine Räumzahn der in Schnittrichtung letzte Zahn einer in Schnittrichtung hintereinander liegenden Gruppe von Zähnen ist, wobei auf dem Rand der Wand eine Mehrzahl von Gruppen angeordnet ist.

Ein in der Wand angeordnetes Fenster wird vorteilhaft dahingehend weitergebildet, dass es einen von den Zähnen wegweisenden Rand ausbildet, der parallel zur Drehebene der Lochsäge, also quer zur Zylinderachse der zylindrischen Höhlung verläuft. Der Sägenkörper kann einen Boden aufweisen, der in der Drehebene liegt, so dass der Rand des Fensters parallel zum Boden verläuft. Dieser gradlinige Rand des Fensters kann als Widerlager für ein Werkzeug, beispielsweise eine Schraubendreherklinge verwendet werden, mit dem der Bohrkern aus der Höhlung des Sägenkörpers herausgebracht werden kann. Hierzu wird das Werkzeug durch das Fenster in die zentrale Höhlung eingeführt und als Hebel benutzt. Das Werkzeug stützt sich dabei am Rand des Fensters ab. Das Fenster kann einen dreieckigen Grundriss aufweisen. Es kann sich um ein gleichschenkliges Dreieck handeln, wobei die gleichen Schenkel des Dreiecks schräg zu dem parallel zum Boden verlaufenden Rand verlaufen können. Diese schräg verlaufenden Ränder des Fensters können Wölbungen aufweisen, wobei die Wölbungen zur Fensterfläche gerichtet sind. Die Ränder des Fensters können unter Ausbildung von Rundungen ineinander übergehen. Bevorzugt sind die Fenster jeweils zwischen einem Boden des Sägenkörpers und dem mit Zähnen versehenen Abschnitt des Randes angeordnet. Die Fenster können zwischen Einschnitten angeordnet sein, die vom die Zähne aufweisenden Rand in die Wand hineingeschnitten sind. Die sich in der Drehebene erstreckende Randkante des Fensters verläuft bevorzugt unmittelbar benachbart zum Boden.

Bei einer vorteilhaften Lochsäge, bei der zwei oder mehrere Zähne eine Gruppe von Zähnen ausbildet und Gruppen im Wesentlichen gleichgestalteter Zähne in Schnittrichtung beabstandet voneinander angeordnet sind, kann vorgesehen sein, dass der jeweils in Schnittrichtung erste Zahn ungeschränkt ist, der zweite Zahn nach außen geschränkt und der dritte Zahn nach innen geschränkt ist, wobei bevorzugt einer der nach innen geschränkten Zähne ein Räumzahn ist, der sich dadurch von anderen nach innen geschränkten Zähnen unterscheidet, dass er um ein größeres Maß als die anderen Zähne radial nach innen geschränkt ist.

Ausführungsbeispiele der Erfindung werden nachfolgend anhand beigefügter Zeichnen erläutert. Es zeigen:

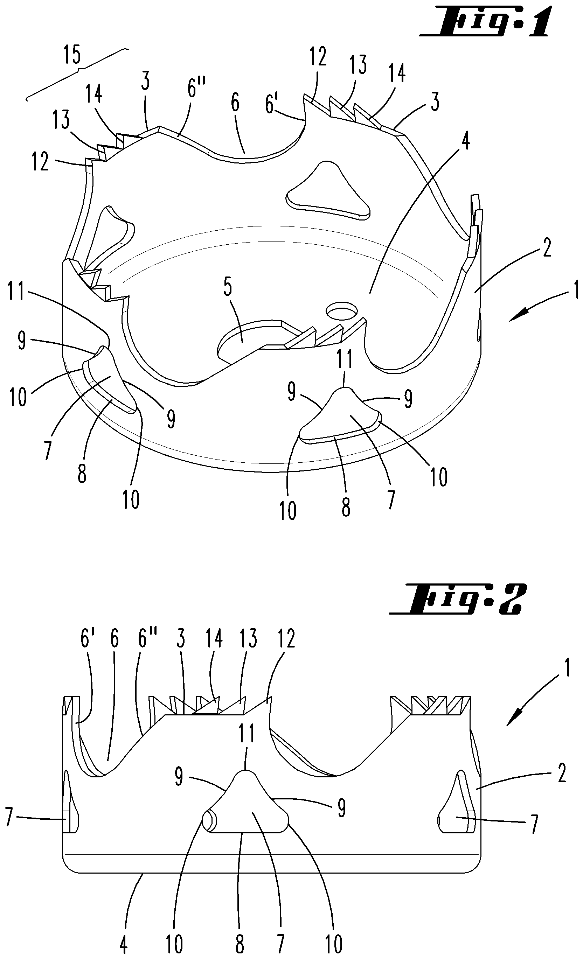

- Fig. 1: In einer perspektivischen Darstellung einen Sägenkörper 1 eines nicht erfindungsgemäßen Beispiels,
- Fig. 2: die Seitenansicht des Sägenkörpers,
- Fig. 3: die Draufsicht auf den Rand des becherförmigen Sägenkörpers,
- Fig. 4: den Schnitt gemäß der Linie IV - IV in Figur 3,
- Fig. 5: eine Darstellung eines erfindungsgemäßen Ausführungsbeispiels,
- Fig. 6: eine Darstellung des erfindungsgemäßen Ausführungsbeispiels,
- Fig. 7: eine Darstellung des erfindungsgemäßen Ausführungsbeispiels und
- Fig. 8: den Schnitt gemäß der Linie VIII - VIII in Figur 7.

Die Zeichnungen zeigen lediglich einen Sägenkörper 1 einer Lochsäge. Der Sägenkörper 1 hat eine topfförmige Gestalt. Er besitzt einen Boden 4, der sich entlang einer Zylinderstirnfläche erstreckt und eine an den Boden 4 angrenzende Wand 2, die die zylindrische Höhlung des Sägenkörpers 1 umgibt. Die Wand 2 besitzt mehrere Fenster 7 und einen Rand 3, der mit Sägezähnen 12, 13, 14, 14' versehen ist, wobei die Zähne 12, 13, 14, 14' in Gruppen 15 angeordnet sind und unmittelbar hintereinander liegen. Zwischen den Gruppen 15 erstrecken sich unverzahnte Abstandszonen. In den Abstandszonen befindet sich jeweils ein Einschnitt 6, der vom Rand 3 ausgeht und in Richtung des Bodens 4 gerichtet ist. Die Fenster 7 erstrecken sich zwischen zwei benachbarten Einschnitten 6 und jeweils unterhalb der Zähne 12,13,14,14'.

Im Zentrum des Bodens 4 befindet sich eine Öffnung 5. Es handelt sich um eine Befestigungsöffnung, an der ein nicht dargestellter Einspannschaft befestigt werden kann, mit dem die Lochsäge mit einem Antriebsaggregat verbunden werden kann, so dass sie um ihre Zentrumsachse, um welche die Wandung 2 verläuft, drehangetrieben werden kann, so dass die Zähne 12, 13, 14, 14' einen kreisringförmigen Sägespalt in ein Werkstück hineinsägen. Mit der Lochsäge kann eine Durchgangsöffnung durch ein plattenförmiges Werkstück gesägt werden. Es verbleibt dann ein Bohrkern innerhalb der von der Wand 2 umgebenden zentralen Höhlung. Dieser Bohrkern muss aus der zentralen Höhlung entfernt werden.

Zum Erleichtern des Entfernens des Bohrkerns aus der zentralen Höhlung besitzt das Fenster 7 einen Rand 8, der in der Drehebene verläuft und dem Boden 4 benachbart ist. Der Rand 8 des Fensters 7 ist nur wenige Millimeter in Richtung auf den Rand 3 der Wand 2 vom Boden 4 entfernt. Der Rand 8 kann als Hebellager für ein schlankes Werkzeug, beispielsweise eine Schraubendreherklinge verwendet werden. Die Schraubendreherklinge wird zum Entfernen des Bohrkerns von außen durch das Fenster 7 in die Höhlung derart eingesteckt, dass das Werkzeugende unterhalb des Bohrkerns liegt. Durch Ausführen einer wippenartigen Hebelbewegung kann mit dem Werkzeug der Bohrkern aus der Höhlung herausgebracht werden.

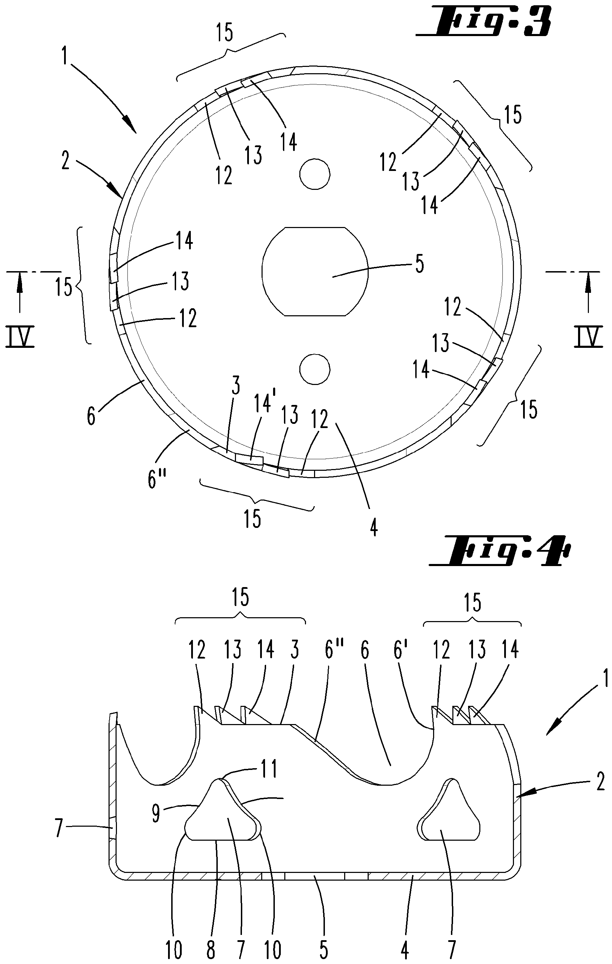

Das Fenster besitzt einen im Wesentlichen dreieckigen Grundriss, wobei die Ecken des Dreiecks von Rundungen 10, 11 ausgebildet sind. Die Dreieckschenkel 9, die dem in der Drehebene verlaufenden Rand 8 schräg gegenüberliegen, besitzen Wölbungen, die in die Fensterfläche hineinragen. Diese Fensterränder 9 verlaufen somit auf Bogenlinien. Aus der Schnittdarstellung der Figur 4 geht hervor, dass die Flächen der Ränder 8, 9 schräg von innen nach außen verlaufen, so dass der Grundriss des Fensters auf der Innenseite der Wand 2 größer ist als der Umriss des Fensters 7 auf der Außenseite der Wand 2.

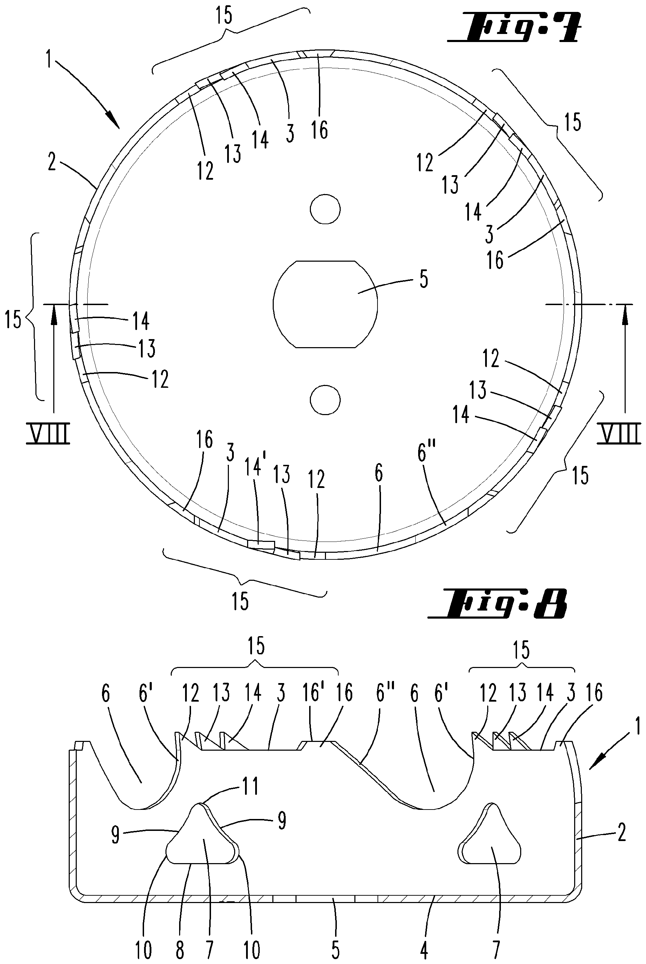

Den Figuren 3 und 7 ist zu entnehmen, dass zu jeder Gruppe 15 drei Zähne 12, 13, 14 gehören, die unmittelbar hintereinander liegen und dass sich in Schnittrichtung hinter jeder Zahngruppe 12,13,14 ein unverzahnter Bereich des Randes 3 anschließt. Der in Schnittrichtung erste Zahn 12 grenzt unmittelbar an einen Randabschnitt 6' eines Einschnittes 6 an. Der Einschnitt 6 verläuft auf einer durchgängig gekrümmten Konturlinie, wobei die in die Schnittflanke des ersten Zahnes 12 über den der Randkante 6' des Einschnittes 6 steiler verläuft als die dieser gegenüberliegende Randkante 6", die unter Ausbildung eines Knicks in den unverzahnten Bereich des Randes 3 übergeht.

Der in Schnittrichtung zuerst liegende Zahn 12 besitzt keine Schränkung. Es handelt sich um einen geraden Zahn. Der unmittelbar darauf folgende Zahn 13 ist etwa um 0,3 mm radial nach außen geschränkt. Die Materialstärke der Wand beträgt etwa 1,2 mm. Die Zahnhöhe beträgt etwa 3 mm. An den radial nach außen geschränkten Zahn 13 schließt sich unmittelbar ein radial nach innen geschränkter Zahn 14 an. Der Zahn 14 ist um etwa 0,3 mm radial nach innen geschränkt. An diesen radial nach innen geschränkten Zahn 14 schließt sich ein unverzahnter Bereich des Randes 3 an.

In einem vorteilhaften Ausführungsbeispiel besitzt eine der Gruppen 15 einen radial nach innen geschränkten Zahn 14', der sich unmittelbar an den radial nach außen geschränkten Zahn 13 anschließt, der um ein größeres Maß, also weiter radial nach innen geschränkt ist als die übrigen radial nach innen geschränkten Zähne 14. Dieser Zahn 14' bildet einen Räumzahn zur Verbreiterung des Sägespaltes aus. Er ist um etwa 0,9 mm nach innen geschränkt. Seine radial äußere Zahnspitze ist um 0,3 mm über die Umfangsmittellinie des Randes 3 nach innen geschränkt. Die übrigen Zähne 13,14 sind nicht über die Umfangsmittellinie hinaus geschränkt. Der Zahn 14' hat die Funktion eines Freischneiders, in dem er den Spalt zwischen Innenseite der Wand 2 und Außenseite des Bohrkernes vergrößert. Dies erleichtert das Herausnehmen des Bohrkerns aus der zentralen Höhlung des Sägenkörpers 1, da er hierzu in Radialrichtung weg vom Zahn 14 verlagert werden kann.

Die gradlinig verlaufende Randkante 8 des Fensters 7 hat etwa eine Länge von 14 mm. Die Randkante 8 kann bis zu 7mm von der Außenseite des Bodens 4 beabstandet sein. Sie kann aber auch bündig mit dem Boden 4 abschließen, also einen Abstand Null vom Boden 4 besitzen. Der Abstand des Scheitels der Rundung 11 vom Fensterrand 8 entspricht etwa 10 mm. Der Abstand des Randes 3 vom Scheitel der Rundung 11 beträgt ebenfalls etwa 10 mm.

In einer nicht dargestellten Variante sind mehrere Freischneiderzähne 14' vorgesehen, wobei sich diese mehreren Freischneider- oder Räumzähne 14' aber nur auf einer Hälfte des kreisbogenförmigen Randes 3 erstrecken, so dass sie nicht den Bohrkern zwischen sich einklemmen können.

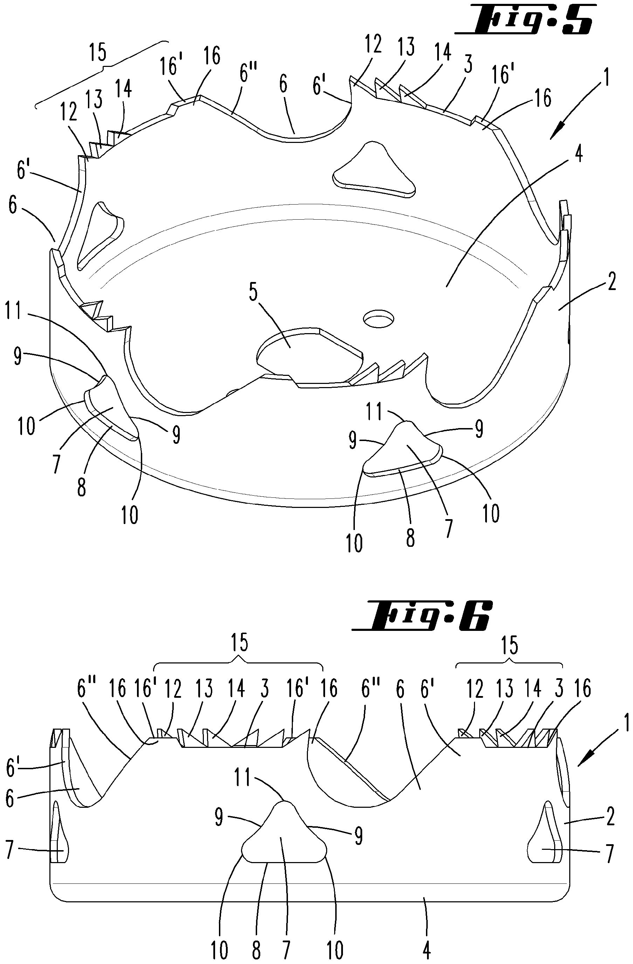

Das in den Figuren 5 bis 8 dargestellte erfindungsgemäße Ausführungsbeispiel besitzt einen Spanbegrenzer 16. Der Spanbegrenzer 16 wird von einem vom Boden 4 wegweisenden, vom Rand 3 abragenden Vorsprung ausgebildet. Der Vorsprung ragt somit in der selben Richtung vom Rand 3 ab, in der auch die Zähne 12,13, 14,14' vom Rand 3 abragen. Die Zähne 12, 13, 14 überragen aber eine Gleitflanke 16', die sich in der Drehebene erstreckt. Die Gleitflanke 16' kann beim Sägen am Boden des mit der Säge erzeugten Sägeschlitzes entlang gleiten und verkürzt somit die effektive Zahnhöhe. Sie begrenzt die Eindringtiefe der Zähne 12, 13, 14, 14' in das Werkstück.

Der Spandickenbegrenzer 16 besitzt eine in Schnittrichtung vordere Randkante, die schräg zum Rand 3 verläuft. Die rückwärtige Randkante des Spandickenbegrenzers 16 geht in den weniger stark ansteigenden Rand 6" des Einschnitts 6 über. Die Randkanten 6', 6" des Einschnittes 6 verlaufen somit auf einer knickstellenfreien Konturlinie von der Spitze des ersten Zahnes 12 bis zur Gleitfläche 16' des Spandickenbegrenzers 16. Beim Ausführungsbeispiel besitzt jede Gruppe 15 einen Spandickenbegrenzer 16, der in Schnittrichtung hinter den Zähnen 12, 13, 14, 14' angeordnet ist und der um ein geringeres Maß in Achsrichtung vom Rand 3 abragt als die Zähne 12, 13, 14. Der Abstand der Gleitflanke 16' vom Rand 3 kann in einem Bereich zwischen einem Drittel und der Hälfte der Höhe der Zähne 12, 13, 14 liegen.

Der Sägenkörper 1 wird im Tiefziehverfahren hergestellt, so dass die Innenseite der Wand 2 eine Formschräge besitzt. Zufolge des eine Freischneidefunktion erfüllenden Zahnes 14' entfaltet die Formschräge keine Klemmwirkung für den Bohrkern.

### Bezugszeichenliste

- 1: Sägenkörper
- 2: Wand des Sägenkörpers
- 3: Rand der Wand
- 4: Boden des Sägenkörpers
- 5: Befestigungsöffnung
- 6: Einschnitt
- 6': Randkante
- 6": Randkante
- 7: Fenster
- 8: Rand des Fensters
- 9: Rand des Fensters
- 10: Rundung
- 11: Rundung
- 12: Zahn
- 13: Zahn
- 14: Zahn
- 14': Zahn
- 15: Gruppe
- 16: Spandickenbegrenzer
- 16': Gleitflanke

## Patentansprüche

1. Lochsäge mit einem Sägenkörper (1) der eine, eine zylindrische Höhlung umgebende Wand (2) aufweist, wobei der Rand (3) der Wand (2) radial nach innen geschränkte Zähne (14, 14') und radial nach außen geschränkte Zähne (13) aufweist, welche Zähne (13, 14, 14') unmittelbar hintereinander liegen und in Gruppen (15) auf dem Rand (3) angeordnet sind und jede Gruppe (15) zumindest einen radial nach innen geschränkten Zahn (14, 14') und einen radial nach außen geschränkten Zahn (13) aufweist und der Rand (3) zwischen zwei in Umfangsrichtung aufeinander folgende Gruppen (15) ansonsten unverzahnt ist und einen Einschnitt (6) in der Wandung (2) aufweist, **dadurch gekennzeichnet, dass** auf dem Rand (3) zumindest ein Spandickenbegrenzer (16) angeordnet ist, dessen in Schnittrichtung vordere Randkante durch einen unverzahnten Umfangsabschnitt von den Zähnen (12, 13, 14, 14') beabstandet ist und dessen rückwärtige Randkante in einen Rand (6") des Einschnittes (6) übergeht.

2. Lochsäge nach Anspruch 1, **dadurch gekennzeichnet, dass** die Wand (2) ein Fenster (7) aufweist, das einen quer zur Zylinderachse verlaufenden, vom Rand (3) der Wand (2) wegweisenden Rand (8) aufweist.

3. Lochsäge nach einem der vorhergehenden Ansprüche, **dadurch gekennzeichnet, dass** die Zähne (14) um etwa 0,3 mm und der mindestens eine Zahn (14') um 0,9 mm radial nach innen geschränkt ist.

4. Lochsäge nach einem der vorhergehenden Ansprüche, **dadurch gekennzeichnet, dass** der mindestens eine um ein größeres Maß radial nach innen geschränkte Zahn (14') der in Schnittrichtung letzte Zahn einer Gruppe von Zähnen (12, 13, 14, 14') ist.

5. Lochsäge nach einem der vorhergehenden Ansprüche, **dadurch gekennzeichnet, dass** der in Schnittrichtung erste Zahn (12) einer Gruppe (15) von Zähnen (12, 13, 14, 14') nicht geschränkt ist.

6. Lochsäge nach einem der vorhergehenden Ansprüche, **dadurch gekennzeichnet, dass** das Fenster (7) einen im Wesentlichen dreieckigen Grundriss aufweist.

7. Lochsäge nach einem der vorhergehenden Ansprüche, **dadurch gekennzeichnet, dass** zumindest einige Ränder (9) in Richtung der Fensterfläche weisende Wölbungen ausbilden und/oder dass die Ränder (8, 9) des Fensters (7) unter Ausbildung von Rundungen (10, 11) ineinander übergehen.

8. Lochsäge nach einem der vorhergehenden Ansprüche, **dadurch gekennzeichnet, dass** jede Gruppe (15) einen Spandickenbegrenzer (16) aufweist.

9. Lochsäge nach einem der vorhergehenden Ansprüche, **dadurch gekennzeichnet, dass** eine Mehrzahl um ein größeres Maß radial nach innen geschränkter Zähne (14') vorgesehen ist, die auf einem sich um weniger als 180 Grad erstreckenden Bogenabschnitt des Randes (3) angeordnet sind.

10. Lochsäge nach einem oder mehreren der vorhergehenden Ansprüche, **dadurch gekennzeichnet, dass** zumindest ein nach radial innen geschränkter Zahn (14) als Räumzahn ausgebildet ist und hierzu um ein größeres Maß nach radial innen geschränkt ist, als die übrigen nach radial innengeschränkten Zähne (14), wobei entweder nur ein einziger Räumzahn vorgesehen ist oder eine Mehrzahl von Räumzähnen sich nur auf einer Hälfte des Randes der Wand erstrecken und die Lochsäge keinen zentralen Pilotbohrer aufweist.

## Claims

1. Hole saw comprising a saw body (1) which has a wall (2) surrounding a cylindrical cavity, the edge (3) of the wall (2) having teeth (14, 14') set radially inward and teeth (13) set radially outward, which teeth (13, 14, 14') are positioned directly one behind the other and are arranged in groups (15) on the edge (3) and each group (15) having at least one tooth (14, 14') set radially inward and one tooth (13) set radially outward and the edge (3) between two successive groups (15) in the circumferential direction being otherwise untoothed and having an indentation (6) in the wall (2), **characterised in that** at least one chip thickness limiter (16) is arranged on the edge (3), the front edge of which limiter in the cutting direction is spaced apart from the teeth (12, 13, 14, 14') by an untoothed circumferential portion and the rear edge of which merges into an edge (6") of the indentation (6).

2. Hole saw according to claim 1, **characterised in that** the wall (2) has a window (7) having an edge (8) which extends transversely with respect to the cylinder axis and faces away from the edge (3) of the wall (2).

3. Hole saw according to either of the preceding claims, **characterised in that** the teeth (14) are set radially inward by approximately 0.3 mm and the at least one tooth (14') is set radially inward by 0.9 mm.

4. Hole saw according to any of the preceding claims, **characterised in that** the at least one tooth (14') which is set radially inward to a greater extent is the last tooth in the cutting direction of a group of teeth (12, 13, 14, 14').

5. Hole saw according to any of the preceding claims, **characterised in that** the first tooth (12) in the cutting direction of a group (15) of teeth (12, 13, 14, 14') is not set.

6. Hole saw according to any of the preceding claims, **characterised in that** the window (7) has a substantially triangular outline.

7. Hole saw according to any of the preceding claims, **characterised in that** at least some edges (9) form bulges pointing in the direction of the window surface and/or **in that** the edges (8, 9) of the window (7) merge into one another to form curves (10, 11).

8. Hole saw according to any of the preceding claims, **characterised in that** each group (15) has a chip thickness limiter (16).

9. Hole saw according to any of the preceding claims, **characterised in that** a plurality of teeth (14') which are set radially inward to a greater extent are provided and are arranged on an arc portion of the edge (3) which extends by less than 180 degrees.

10. Hole saw according to one or more of the preceding claims, **characterised in that** at least one tooth (14) which is set radially inward is designed as a rake tooth and for this purpose is set radially inward to a greater extent than the other teeth (14) which are set radially inward, with either only a single rake tooth being provided or a plurality of rake teeth extending only on one half of the edge of the wall and the hole saw not having a central pilot drill.

## Revendications

1. Scie-cloche avec un corps de scie (1) qui présente une paroi (2) entourant une cavité cylindrique, dans laquelle le bord (3) de la paroi (2) présente des dents (14, 14') s'écartant radialement vers l'intérieur et des dents (13) s'écartant radialement vers l'extérieur, lesquelles dents (13, 14, 14') sont disposées directement les unes derrière les autres et agencées en groupes (15) sur le bord (3) et chaque groupe (15) présente au moins une dent (14) s'écartant radialement vers l'intérieur, 14) et une dent (13) s'écartant radialement vers l'extérieur, et le bord (3) entre deux groupes (15) se succédant dans la direction circonférentielle est pour le reste dépourvu de dents et présente une échancrure (6) dans la paroi (2), **caractérisée en ce que** sur le bord (3) est agencé au moins un limiteur d'épaisseur de copeaux (16) dont le bord avant, dans la direction de coupe, est espacé des dents (12, 13, 14, 14) par une partie circonférentielle dépourvue de dents et dont le bord arrière passe dans un bord (6') de l'échancrure (6).

2. Scie-cloche selon la revendication 1, **caractérisée en ce que** la paroi (2) comporte une fenêtre (7) laquelle présente un bord (8) qui s'étend transversalement à l'axe du cylindre et est éloigné du bord (3) de la paroi (2).

3. Scie-cloche selon l'une des revendications précédentes, **caractérisée en ce que** les dents (14) sont écartées radialement vers l'intérieur sur environ 0, 3 mm et l'au moins une dent (14) est écartée radialement vers l'intérieur sur 0,9 mm.

4. Scie-cloche selon l'une des revendications précédentes, **caractérisée en ce que** l'au moins une dent (14') écartée radialement vers l'intérieur dans une plus grande mesure, est la dernière dent d'un groupe de dents (12, 13, 14, 14') dans la direction de coupe.

5. Scie-cloche selon l'une des revendications précédentes, **caractérisée en ce que** la première dent (12) d'un groupe (15) de dents (12, 13, 14, 14') dans la direction de coupe n'est pas écartée.

6. Scie-cloche selon l'une des revendications précédentes, **caractérisée en ce que** la fenêtre (7) a un contour de base sensiblement triangulaire.

7. Scie-cloche selon l'une des revendications précédentes, **caractérisée en ce qu'**au moins quelques bords (9) forment des courbures dirigées vers la surface de la fenêtre et/ou **en ce que** les bords (8, 9) de la fenêtre (7) passent l'un à l'autre en formant des arrondis (10, 11).

8. Scie-cloche selon l'une des revendications précédentes, **caractérisée en ce que** chaque groupe (15) comprend un limiteur d'épaisseur de copeaux (16).

9. Scie-cloche selon l'une des revendications précédentes, **caractérisée en ce qu'**il est prévu une pluralité de dents (14') écartées d'une plus grande mesure radialement vers l'intérieur, qui sont agencées sur une portion d'arc du bord (3) s'étendant sur moins de 180 degrés.

10. Scie-cloche selon une ou plusieurs des revendications précédentes, **caractérisée en ce qu'**au moins une dent (14) écartée radialement vers l'intérieur est formée en tant que dent de dégagement et est à cet effet écartée radialement vers l'intérieur dans une plus grande mesure que les autres dents (14) écartées radialement vers l'intérieur, dans laquelle est prévue soit une seule dent de dégagement est prévue, soit plusieurs dents de dégagement s'étendant seulement sur une moitié du bord de la paroi et la scie-cloche ne comporte pas de foret pilote central.
